# EUROPÄISCHE PATENTANMELDUNG

(11) **EP 2 530 106 A2**
(43) Veröffentlichungstag der Anmeldung: **05.12.2012**
(21) Anmeldenummer: 12169933.4
(22) Anmeldetag: 30.05.2012
(51) Int. Cl.: C08J 3/12

(54) **Verfahren zur Herstellung eines Elastomer-Polymer-Compounds**

(30) Priorität: 31.05.2011 AT 7942011; 31.05.2011 AT 7952011
(71) Anmelder: ART Asamer Rubber Technology GmbH, 4694 Ohlsdorf (AT)
(72) Erfinder: Danner, Thomas, 4810 Gmunden (AT); Meier, Hannes, 4081 Hartkirchen (AT)
(74) Vertreter: Burger, Hannes

(57) **Zusammenfassung**

Die Erfindung betrifft ein Verfahren zur Herstellung eines Elastomer-Polymer-Compounds nach dem Elastomerpartikel mit einem Polymer vermischt und beschichtet werden oder mit einer Vorstufe für ein Polymer vermischt und beschichtet werden und danach diese Vorstufe des Polymers polymerisiert wird, wobei als Polymer mindestens ein Thermoplast oder Duroplast eigesetzt wird oder als Vorstufe für das Polymer mindestens ein vernetzbares Kunstharz eingesetzt wird, das nach der Vernetzung ein Thermoplast oder ein Duroplast bildet. Weiter betrifft die Erfindung einen nach diesem Verfahren hergestellten Füllstoff.

## Beschreibung

Die Erfindung betrifft ein Verfahren zur Herstellung eines Elastomer-Polymer-Compounds nach dem Elastomerpartikel mit einem Polymer vermischt und beschichtet werden oder mit einer Vorstufe für ein Polymer vermischt und beschichtet werden und danach diese Vorstufe des Polymers polymerisiert wird, Verfahren zur Reduktion des Geruchs von Gummipartikel enthaltend Mercaptobenzothiazol, einen Füllstoff für Beschichtungen bestehend aus einem Elastomer-Polymer-Compound aus Elastomerpartikel und einem Polymer, wobei die Elastomerpartikel mit dem Polymer beschichtet sind, sowie die Verwendung eines, insbesondere vernetzten, Thermoplastes bzw. Duroplasts.

Die Entsorgung von Altreifen und Altgummi erfolgt derzeit weltweit überwiegend durch Deponierung und in untergeordnetem Ausmaß durch Verbrennung. Durch die Richtlinie 1999/31/EG des Rates vom 26. April 1999 über Abfalldeponien ist in der EU vorgesehen, dass Mitgliedsstaaten Maßnahmen treffen, damit ganze Reifen vier Jahre nach dem Inkrafttreten der Richtlinie nicht mehr auf einer Deponie angenommen werden, ausgenommen Reifen, die als Material für technische Zwecke verwendet werden, sowie geschredderte Altreifen sieben Jahre nach dem Inkrafttreten der Verordnung.

Gemäß Stand der Technik erfolgt eine Verwertung von Altreifen und Altgummi vorwiegend durch energetische Nutzung als Ersatzbrennstoff in der Zementklinkerproduktion oder in dafür speziell ausgestatteten Kraftwerken. Eine stoffliche
Verwertung gemäß Stand der Technik ist, abgesehen von begrenzten Möglichkeiten zur Weiterverwendung der Gebrauchtreifen oder Nutzung geeigneter Reifenkarkassen in der Herstellung runderneuerter Reifen, durch die mechanische
Aufbereitung der Altprodukte und die Gewinnung verwertbarer Gummigranulate und Gummimehl möglich.

In einigen Ländern, wie z. B. in Österreich, ist die Deponierung von Abfällen mit mehr als 5% organischem Kohlenstoffgehalt (damit auch von Altreifen und Altgummi) gesetzlich verboten.

Es ist bekannt, Altreifen und Altgummi grob und dann fein zu zerteilen und den Elastomeranteil, der in Form eines Granulates mit Korndurchmessern bis zu etwa 3 mm anfällt, nach Abscheiden des Armierungsanteils zur Herstellung von diversen Produkten einzusetzen.

So beschreibt z.B. die DE 202 06 801 U1 ein granulatförmiges Additiv, vorzugsweise anwendbar zur Bitumenmodifikation im Straßenbau, bestehend im Wesentlichen aus recyceltem, gemahlenem Gummi und einem Bindemittel. Das Bindemittel bindet die feinvermahlenen Partikel zeitweilig zu einem körnigen, gut rieselfähigen Granulat, das in z. B. heißem Bitumen sehr gut löslich ist. Das Bindemittel ist biopolymeren Ursprungs, vorzugsweise auf Getreidebasis. Der Anteil des Bindemittels beträgt ca. 1 bis 80%. Die maximale Körnung des wesentlichen Anteils des verwendeten Gummimehles ist kleiner gleich 1 mm. Die Mehrzahl der Gummi- und Zuschlagstoffpartikel eines jeden Granulatkorns kann vollständig oder fast vollständig von dem Bindemittel umhüllt sein bzw. umhüllt das Bindemittel eine äußere Hülle um viele nicht direkt von Bindemittel umhüllte Partikel. Zur Herstellung des gummibasierten Additivs wird das spezielle Gummimehl zusammen mit einem biopolymeren Bindemittel extrudiert. Die Extrusion erfolgt mittels Doppelschneckenextruder mit definiertem Verhältnis von Schneckenlänge zu Schneckendurchmesser (L/D-Verhältnis). Der Extrusionsprozess wird so gestaltet, dass eine Agglomeration des Gummimehls erfolgt, die aber bei der Erhitzung z.B. im Bitumen wieder aufgelöst wird. Zur Verbesserung der Verarbeitungseigenschaften können bei der Extrusion weitere Additive wie Fasern, Duftstoffe oder Akzeptoren zugeben werden. Damit können Geruchsbelästigungen, die beim Einarbeiten der Gummipartikel durch das Erhitzen im Bitumen auftreten, minimiert werden.

Aus der DE 40 11 794 A1 ist ein Verfahren zur Herstellung von Grundmaterial zum Herstellen von Platten, Matten und Formartikeln aus Mischungen von gemahlenen Gummiabfällen mit oder ohne Verstärkungseinlagen, Mastiziermittel, Naturkautschuk, Beschleunigersystem, Zinkoxid und Schwefel bekannt, nach dem der Gummiabfallmischung 2 Gew.-% bis 6 Gew.-% eines aliphatisch aromatischen Weichharzes, gegebenenfalls verbatcht mit Naturkautschuk, als zähflüssige Substanz mit einem spezifischen Gewicht von 0,8 bis 1,2 g/cm³ und einer Viskosität von 60 mPas bis 100 mPas bei 80 °C zugefügt werden, wobei das Einmischen auf der Walze erfolgt. Das Weichharz kann auch in fester Form, verbatcht mit Kieselsäure, zugefügt werden.

Die DD 265 460 A1 beschreibt eine Korrosionsschutzschicht für mit Seewasser beaufschlagte Kühler die aus einem Epoxidharz-Gummimehl-Compound besteht und ein Verhältnis Harz/Gummimehl = 40 bis 60:60 bis 40 aufweist. Das Gummimehl kann eine Körnung von weniger als 200pm und eine Härte von 45 bis 85 Shore aufweisen.

Es ist die Aufgabe der Erfindung, die Verwertbarkeit von Altgummi zu verbessern.

Diese Aufgabe der Erfindung wird mit den eingangs genannten Verfahren, unabhängig davon durch den eingangs genannten Füllstoff sowie unabhängig durch die erfindungsgemäßen Verwendungen gelöst, wobei nach dem Verfahren vorgesehen ist, dass als Polymer für die Vermischung mit den Elastomerpartikel mindestens mindestens ein Thermoplast und/oder Duroplast eigesetzt wird oder dass als Vorstufe für das Polymer mindestens ein vernetzbares Kunstharz eingesetzt wird, das nach der Vernetzung ein Thermoplast oder Duroplast bildet, dass bei dem Füllstoff das Polymer eine, insbesondere vernetzte, thermoplastische oder duroplastische Umhüllung der Elastomerpartikel bildet, gemäß einer Verwendung vorgesehen ist, dass ein, insbesondere vernetzbares Thermoplast oder Duroplast zur Reduktion des Geruches von Gummipartikel eingesetzt wird, bzw. gemäß einer weiteren Verwendung vorgesehen ist, dass ein vernetzbares Thermoplast oder Duroplast zur Herstellung eines rieselfähigen Füllstoffes auf Basis eines Elastomer-Polymer-Compounds mit einer Partikelgröße zwischen 0,001 mm und 0,15 mm eingesetzt wird.

Von Vorteil ist dabei, dass der Altgummi feiner gemahlen werden kann, und trotzdem ein rieselfähiges Produkt erhalten wird, wobei die geringe Korngröße nach dem Mahlen beibehalten wird, also keine Agglomeratbildung stattfindet, da diese durch die thermoplastische bzw. duroplastische Umhüllung zumindest weitgehend vermieden werden kann. Zudem kann damit dem Füllstoff, also dem partikulären Altgummi, eine bessere Beständigkeit gegen Klimafaktoren, insbesondere UV-Strahlung, verliehen werden. Darüber hinaus wird durch die zumindest teilweise Einhüllung der Gummipartikel eine Geruchsreduktion des Altgummis erreicht, wodurch dieser als Füllstoff vielseitiger verwendbar ist. Es sei in diesem Zusammenhang erwähnt, dass mit dem Ausdruck "Geruchsreduktion" in Hinblick auf den Altgummi nicht gemeint ist, dass der Eigengeruch des Altgummis an sich verringert wird, sondern gemeint ist, dass verhindert bzw. reduziert wird, dass der Eigengeruch des Altgummis wahrnehmbar ist. Gemäß einer Ausführungsvariante ist vorgesehen, dass das Kunstharz vorpolymerisiert eingesetzt wird, so dass es sich im sogenannten B-Zustand befindet. Die unterbrochene Polymerisierung und/oder Vernetzung kann durch Zufuhr von Wärme oder Strahlungsenergie fortgesetzt werden, wobei das vorpolymerisierte Harz ausreagiert (Thermoplast) oder irreversibel ausreagiert (Duroplast) und in den so genannten C-Zustand übergeht. Die Verwendung eines vorpolymerisierten Kunstharzes hat den Vorteil, dass es in der Mischphase mit den Gummipartikel in noch flüssiger Form vorliegen kann, wodurch die Benetzung und damit die Ausbildung der zumindest teilweisen Umhüllung der Gummipartikel verbessert werden kann. Gleichzeitig kann damit aber auch die Zeit bis zur Ausreaktion des Kunstharzes verkürzt werden, wodurch eine Agglomeratbildung der Gummipartikel selbst bei sehr feiner Aufmahlung des Gummimehls, besser verhindert werden kann. Es ist damit der Füllstoff besser in dünnen Beschichtungen, wie z.B. Lacken, etc., einsetzbar.

Bevorzugt ist das Polymer oder das Kunstharz bzw. mindestens eines der Harze ausgewählt aus einer Gruppe umfassend oder bestehend aus Polyolefine, Polystyrole, Polyester, Polyamide, Polyimide, Harnstoff-Formaldehydharze, Melaminharze, Melamin-Formaldehydharze, Melamin-Harnstoff-Formaldehydharze, Melamin-Harnstoff-Phenol-Formaldehydharze, Phenol-Formaldehydharze, Resorcin-Formaldehydharze, vernetzbare Isocyanat-Polyolharze, Epoxidharze, Acrylate, Methacrylate, Polystyrole (ungesättigte) Polyesterharze oder einer Mischung zweier oder mehrerer dieser Harze, da mit diesen Polymeren bzw. Harzen die Benetzbarkeit der Gummipartikel sowie der Verarbeitbarkeit der Gummi-Kunstharz-Mischung verbessert werden kann. Zudem kann damit auch eine Funktionalisierung der Oberfläche des Gummi-Polymer-Compounds und damit eine bessere Einbindung dieses Compounds in die Basis eines Beschichtungssystems erreicht werden.

Vorzugsweise wird ein selbstvernetzendes Kunstharz eingesetzt, da damit die Eigenschaften des fertigen Gummi-Polymer-Compounds vergleichmäßigt werden können. Insbesondere ist der jeweilige erreichte Härtegrad der duroplastischen Umhüllung nicht beeinflusst von schwankenden Mengen an zuzusetzenden Härter, d.h. nicht abhängig von Inhomogenitäten der Mischung in Bezug auf den Härteranteil. Es ist aber prinzipiell im Rahmen der Erfindung auch möglich, so genannte Zweikomponentenharze zu verwenden, bei denen ein gesonderter Härter zugesetzt wird.

Vorzugsweise beträgt der Anteil des Thermoplastes bzw. der Kunstharzanteil an dem Compound zwischen 5 Gew.-% und 50 Gew.-%. Unterhalb von 5 Gew.-% wurde beobachtet, dass die Umhüllung teilweise so unvollständig ausgebildet wird, sodass die Feinheit der Partikel durch die feine Aufmahlung im Mischprozess mit dem Polymer bzw. dem Kunstharz nicht aufrecht erhalten werden kann und sich Agglomerate bilden. Es ist aber auch die Reduktion des Gummigeruchs des Compounds nicht bzw. nicht im gewünschten Ausmaß erreichbar. Oberhalb von 50 Gew.-% leidet die Wirtschaftlichkeit des Verfahrens, da in diesem Fall bereits mehr als 50 Gew.-% des Altgummis durch einen Neustoff ersetzt werden müsste. Generell sei an dieser Stelle angemerkt, dass ein Anteil des Polymers bzw. des Kunstharzes an dem Compound vorzugsweise im unteren Teilbereich des angegebenen Bereichs liegt.

Gemäß einer anderen Ausführungsvariante kann vorgesehen werden, dass das Elastomer-Polymer-Compound nach dem Vermischen der Elastomerpartikel mit dem Polymer bzw. dem Kunstharz pelletiert wird. Durch die Pelletierung des Dry-Blends kann die Rieselfähigkeit des fertigen Compounds bzw. generell dessen Handhabung verbessert werden. Zudem kann durch die Pelletierung eine weitere Reduktion der Geruchsbelästigung durch die Gummipartikel erreicht werden, da in den Pellets Gummipartikel vorhanden sind, die nicht nur von einer Schicht aus dem Thermoplast bzw. dem Kunstharz umgeben sind, sondern zumindest teilweise auch von einer Schicht aus dem Compound selbst, wodurch die Diffusionswege für die geruchsverursachenden Moleküle, falls Diffusion auftritt, verlängert werden können.

Es hat sich dabei als vorteilhaft herausgestellt, wenn die Pellets mit einer Korngröße zwischen 2 mm und 5 mm hergestellt werden. Unterhalb von 2 mm werden die voranstehend genannten Effekte nicht im gewünschten Ausmaß erreicht. Oberhalb von 5 mm kann es vorkommen, dass die Einmischung in Beschichtungssysteme verschlechtert wird, insbesondere eine längere Einmischzeit erforderlich ist.

Die Elastomerpartikel können aufgrund der Verwendung des Thermoplastes bzw. des Kunstharzes sehr fein gemahlen werden, ohne zu agglomerieren, wodurch sich das Einsatzspektrum von Altgummi erhöhen lässt. Vorzugsweise werden dabei die Gummipartikel auf eine Korngröße zwischen 0,001 mm und 1 mm gemahlen bzw. mit einer Korngröße aus diesem Bereich eingesetzt. Gummipartikel mit einer Korngröße unterhalb von 0,001 mm sind nur mehr mit höherem energetischem Aufwand herstellbar, wodurch sich der Einsatz von Altgummi in Hinblick auf andere, in der Wiederverwertung weniger problematischere Füllstoffe relativiert. Korngrößen über 1 mm sind zwar prinzipiell möglich, bevorzugt werden jedoch Gummipartikel mit einer Korngröße von maximal 1 mm, da die vollständige Ausbildung der thermoplastischen bzw. duroplastischen Umhüllung, also die Einkapselung der Gummipartikel, bei größeren Korngrößen ebenfalls nur mit einem höheren Aufwand gewährleistbar ist.

Es ist aber auch möglich, dass die Elastomerpartikel in mehreren verschiedenen Korngrößenbereichen eingesetzt werden, wodurch ein Produkt mit einem Korngrößenspektrum zur Verfügung gestellt werden kann, und damit ein Produkt, das einen höheren Anteil an Füllstoff in einem Beschichtungssystem erlaubt. Es sei darauf hingewiesen, dass unter einem Korngrößenspektrum in Sinne der Erfindung nicht die üblicherweise statistische Verteilung der Korngrößen um einen Mittelwert, wie sie bei großtechnischen Mahlprozessen üblich ist, verstanden wird.

Durch zumindest teilweise Umhüllung der Gummipartikel des Füllstoffes kann die Kompressibilität der Elastomerpartikel, speziell wenn diese einen größeren Partikeldurchmesser aufweisen, zumindest teilweise ausgeglichen werden, wodurch auch Anwendungen für den Altgummi erschlossen werden, die aufgrund gerader dieser Kompressibilität nicht zugänglich wären. Durch die "harte Schale" des Füllstoffes können dessen mechanische Festigkeitswerte verbessert werden, wodurch dieser besser in Beschichtungen im Bereich von statisch tragenden Bauteilen einsetzbar ist, insbesondere als Verstärkungsstoff. Von Vorteil ist dabei eine Maximalkorngröße der Gummipartikel von 1 mm.

Um diese Eigenschaften des Füllstoffes weiter zu verbessern, ist nach einer weiteren Ausführungsvariante des Füllstoffes vorgesehen, dass das Polymer der Umhüllung einen Vernetzungsgrad (Härtungsgrad) von zumindest 50 % aufweist.

Zum besseren Verständnis der Erfindung wird diese im Nachfolgenden näher erläutert.

Einführend sei festgehalten, dass die in der Beschreibung gewählten Lageangaben, wie z.B. oben, unten, seitlich usw. auf die unmittelbar beschriebene Ausführungsvariante bezogen und bei einer Lageänderung sinngemäß auf die neue Lage zu übertragen sind.

Die Erfindung betrifft ein Verfahren zur Oberflächenbeschichtung von rezyklierten Elastomer-Partikeln mit Polymeren, die anschließendes Feinstmahlen und auch erneutes Vernetzen mit Thermoplast- oder Gummimatrices ermöglicht. Damit können die sonst nötigen kryogenen Verfahren umgangen und überhaupt noch feinere Pulver (=Dryblends) hergestellt werden. In Folgeprozessen bewirkt diese Oberflächenbeschichtung, dass in Analogie zu einer erneuten Vulkanisation die Elastomer-Partikel mit einer Thermoplast- oder Gummi-Matrix vernetzt werden können. Weiter ermöglicht die Oberflächenbeschichtung eine bessere Anbindung der Partikel an beliebige Thermplast-Matrices. So können rezyklierte Elastomer-Partikel ohne Devulkanisation wieder in Gummiverarbeitungs-Prozesse zugeführt werden, die im Endprodukt auch bei höheren Dosierungen keinen Eigenschafts-Abfall bewirken. Außerdem können die feinen Elastomer-Partikel in Thermoplasten signifikante Elastifizierungen bewirken. Durch die erzielbare Feinheit können diese Partikel auch in dünnen Lackschichten eingesetzt werden.

Durch Verwendung von reinen Thermoplasten als Oberflächenbeschichtung können diese Dryblends auch direkt einem Formgebungsprozess zugeführt werden.

Zur Herstellung des Gummi- bzw. generell Elastomer-Polymer-Compounds bzw. des Füllstoffes aus diesem Gummi/Elastomer-Polymer-Compound werden in einem ersten Schritt die Altgummiabfälle bzw. generell die eingesetzten Gummi-bzw. Elastomerprodukte gegebenenfalls nach einer Vorsortierung auf die gewünschte Korngröße vermahlen. Dazu können die (Alt)gummiteile bedarfsweise vorerst in einem Vorzerkleinerungsschritt auf eine größere Partikelgröße zu so genannten Elastomerschnitzel vorzerkleinert, insbesondere geschreddert, werden. Diese Elastomerschnitzel können beispielsweise eine Größe von 5 cm bis 20 cm aufweisen. Für das Mahlen/die Nachzerkleinerung selbst und gegebenenfalls das Schreddern werden für diesen Zweck übliche Mühlen, insbesondere Prall- oder Strahlmühlen, bzw. Schredder verwendet, wie sie aus dem Stand der Technik bekannt sind.

Ein mögliches Verfahren zum mechanischen Zerkleinern ist in der AT 413 355 B beschrieben. Demnach können, insbesondere wenn Altreifen oder Förderbänder, etc. eingesetzt werden, vorerst die metallischen und/oder textilen Bestandteile, wie z.B. Armierungen, Corde, etc., entfernt werden, beispielsweise mittels Magnetabscheider um die metallischen Bestanteile abzusondern.

Es ist auch möglich das Mahlen bzw. die Nachzerkleinerung bei einer Temperatur unterhalb der Raumtemperatur durchzuführen, beispielsweise mit flüssigem Stickstoff, wenngleich, wie dies bereits voranstehend ausgeführt wurde, für die Erfindung nicht notwendig ist.

Das Resultat der mechanischen Zerkleinerung ist eine Elastomer- bzw. Gummimehl, das vorzugsweise eine Korngröße zwischen 0,001 mm und 1 mm, insbesondere zwischen 0,001 mm und 0,4 mm, aufweist.

Es sei allerdings darauf hingewiesen, dass es im Rahmen der Erfindung auch möglich ist, für das Elastomer-Polymer-Compound größere Elastomerpartikel zu verwenden, beispielsweise bis zu einer Partikelgröße von bis zu 3 mm, sodass gegebenenfalls auf das Nachzerkleinern bzw. dem Mahlschritt verzichtet werden kann und die Gummipartikel nach der Vorzerkleinerung direkt eingesetzt werden können.

Des Weiteren ist es möglich, dass die Vorbereitung der Elastomerprodukte ausschließlich aus einer mechanischen Grobzerkleinerung oder einer mechanischen Feinzerkleinerung mit dem Ergebnis von Elastomerpartikel voranstehend genannter Korngröße bestehen kann, dass also mit anderen Worten die metallischen und/oder textilen Bestandteile der Elastomerprodukte mitverarbeitet werden, wenngleich dies nicht die bevorzugte Ausführungsvariante der Erfindung ist.

Bei der Vor- und Nachzerkleinerung fallen in der Regel Elastomerpartikel mit unterschiedlichem Durchmesser, d.h. unterschiedlicher Partikelgröße, an. Bei Bedarf kann eine höhere Homogenität der Partikelgrößenverteilung erreicht werden, indem die grob und/oder fein zerkleinerten Elastomerpartikel sortiert werden, beispielsweis mit Hilfe von entsprechenden Sieben, sodass ein Gummi- bzw. Elastomermehl mit einem engen Korngrößenspektrum erzeugt wird, das beispielsweise eine Abweichung von der mittleren Partikelgröße (arithmetisches Mittel) von maximal ± 20 %, insbesondere maximal ± 10 %, des Mittelwertes aufweist.

Daneben besteht allerdings auch die Möglichkeit, dass bewusst verschiedene Korngrößenfraktionen für die weitere Verarbeitung eingesetzt werden.

In der Folge werden die Elastomerpartikel mit einem Polymer oder mit einer Vorstufe für ein Polymer versetzt und mit diesem zumindest teilweise, bevorzugt vollständig, beschichtet, und diese beschichteten Partikel nach der Beschichtung auf die endgültige Korngröße bzw. Korngrößenverteilung vermahlen. Für dieses Feinmahlen können übliche Mühlen, insbesondere Prall- oder Strahlmühlen, bzw. Schredder verwendet, wie sie aus dem Stand der Technik bekannt sind.

Durch die an die Beschichtung anschließende Feinmahlung können Elastomer-Polymer-Compound Partikel erzeugt werden, die einen Partikeldurchmesser mit einer Verteilung zwischen 0 µm und 60 µm aufweisen. Im Vergleich dazu werden mit heute üblichen kryogenen Mahlverfahren Korngrößen mit einer Verteilung zwischen 0 µm und 180 µm erreicht. Es können also mit dem Verfahren nach der Erfindung einerseits ohne zusätzliche Maßnahmen, wie z.B. Sieben, deutlich kleinere Partikel hergestellt bzw. bereitgestellt werden, und andererseits kann durch die nicht zwingend notwendige kryogene Aufarbeitung der Verfahrensablauf vereinfacht werden.

Durch diese Beschichtung wird eine deutliche Reduktion des Geruches der Elastomerpartikel erreicht. Darüber hinaus kann damit eine Elastomermehl hergestellt werden, dass trotz der feinen Aufmahlung im Micrometerbereich nach wie vor rieselfähig ist und nicht agglomeriert. Das Polymer ist dabei ein Thermoplast und/oder ein Duroplast bzw. ein, gegebenenfalls vernetzbares, Kunstharz, das nach der Vernetzung ein Thermoplast oder Duroplast bildet.

Wie nachstehend noch erläutert wird, wird mit dem Verfahren eine Geruchsreduktion der Elastomerpartikel erreicht, obwohl durch das an die Beschichtung anschließende Feinmahlen die Oberfläche der Elastomerpartikel teilweise wieder frei gelegt wird. Die verwendeten Thermoplaste und/oder Duroplaste bzw. Harze sind bei den Verarbeitungsbedingungen allerdings relativ dünnflüssig, benetzen also auch poröse Stellen an der Oberfläche gut. Die durch die Aufmahlung eventuell frei werdende Oberfläche trägt daher kaum zur Geruchsbildung bei.

Es besteht auch die Möglichkeit mehr als ein verschiedenes Thermoplast oder Duroplast oder Kunstharz einzusetzen, beispielsweise eine Mischung aus zwei, drei oder vier verschiedenen Thermoplasten und/oder Duroplasten oder Kunstharzen.

Wie bereits voranstehend ausgeführt, kann das eingesetzte Kunstharz bereits vorpolymerisiert sein, sich also im so genannten B-Zustand befinden.

Die Vermischung mit dem Thermoplast und/oder Duroplast oder dem vernetzbaren Kunstharz mit den Elastomerpartikeln erfolgt vorzugsweise in einem Extruder, insbesondere in einem Doppelschneckenextruder, wobei auch Einfachschneckenextruder verwendet werden können. Es können aber auch andere bekannte Mischer eingesetzt werden.

Vorzugsweise ist Thermoplast oder das Kunstharz bzw. mindestens eines der Harze ausgewählt ist aus einer Gruppe umfassend bzw. bestehend aus Polyolefine, insbesondere Polyethylene, Polypropylene, Polystyrole, Polyester, Polyamide, Polyimide. Das Duroplast ist vorzugsweise ausgewählt aus einer Gruppe umfassend bzw. bestehend aus Harnstoff-Formaldehydharze, Melaminharze, Melamin-Formaldehydharze, Melamin-Harnstoff-Formaldehydharze, Melamin-Harnstoff-Phenol-Formaldehydharze, Phenol-Formaldehydharze, Resorcin-Formaldehydharze, vernetzbare Isocyanat-Polyolharze, Epoxidharze, Acrylate, Methacrylate, Polystyrole, Polyesterharze. Es wird damit nicht nur eine Geruchsreduktion der Elastomerkomponente des Füllstoffes bzw. eine feinere Aufmahlung der Elastomerpartikel erreicht, sondern kann durch die Funktionalisierung der Oberfläche der Elastomerpartikel eine bessere Anbindung, im Vergleich zu Elastomerpartikel ohne Polymerumhüllung, an eine Matrix eines Beschichtungssystems, in dem der Füllstoff verwendet wird, erreicht werden. Insbesondere werden Thermoplaste oder Duroplaste oder Kunstharze bevorzugt, die als frei funktionelle Gruppen für eine weitere Reaktion oder für elektrostatische Wechselwirkungen mit der Matrix zumindest eine Gruppe ausgewählt aus einer Gruppe umfassend oder bestehend aus Hydroxylgruppen, Carboxylgruppen, Aminogruppen, Ketongruppen, Amidgruppen, Imidgruppen, oder Mischungen aus zumindest zwei daraus aufweisen.

Bevorzugt ist das Polymer bzw. die Vorstufe für das Polymer ein selbstvernetzendes Polymer, sofern ein vernetzendes Polymer eingesetzt wird, sodass die Vernetzung bei Mischvorgang mit den Elastomerpartikel von selbst einsetzt.

Obwohl es prinzipiell möglich ist Vorstufen für das duroplastische Polymer zu verwenden, bei denen die Vernetzung durch eine Vernetzungshilfsmittel, wie z.B. eine Säure, eine Base, ein Polyol, etc., eingeleitet wird, wie dies für derartige Polymere aus dem Stand der Technik bekannt ist, ist es jedoch bevorzugt, wenn das Polymer ein selbstvernetzendes Polymer ist, sodass die Vernetzung bei Mischvorgang mit den Elastomerpartikel von selbst einsetzt.

Die Vernetzung kann dabei durch eine im Vergleich zu Raumtemperatur erhöhte Temperatur eingeleitet werden, ebenso sind aber auch andere Anregungsquellen verwendbar, beispielsweise Strahlungsquellen, wie z.B. IR-Strahlungsquellen, UV-Strahlungsquellen oder Elektronenstrahlstrahlungsquellen, wobei in diesem Fall die Anregung der Vernetzung nach dem Vermischen der Vorstufe für das vernetzte Polymer mit den Elastomerpartikel in einem eigenen Verfahrensschritt erfolgen kann. Ebenso können peroxidische Vernetzungssysteme verwendet werden. Bei all diesen letztgenannten Verfahren ist es möglich, dass der Vorstufe Starterkomponenten zugesetzt werden, beispielsweise IR- oder UV-Initiatoren. Derartige Verbindungen sind ebenso wie die Verbindungen zur peroxidischen Vernetzung aus dem Stand der Technik zur Kunststoffverarbeitung bekannt, sodass in Bezug darauf auf die einschlägige Literatur dazu verwiesen sei.

Vorzugsweise wird ein Kunstharz verwendet, das eine Gelierzeit zwischen 0,5 Minuten und 10 Minuten, insbesondere zwischen 1 Minute und 5 Minuten, aufweist.

Das Einmischen der Vorstufe für das, gegebenenfalls vernetzte, thermoplastische oder duroplastische Polymer kann bei einer Temperatur durchgeführt werden, die ausgewählt ist aus einem Bereich mit einer unteren Grenze von 20 °C und einer oberen Grenze von 145 °C, insbesondere aus einem Bereich mit einer unteren Grenze von 20 °C und einer oberen Grenze von 120 °C. Die Zeitdauer für die Einmischung kann zwischen 20 Sekunden und 3 Minuten betragen, insbesondere zwischen 30 Sekunden und 2 Minuten, betragen.

Der Anteil, in dem das zumindest eine Thermoplast und/oder Duroplasts oder die Vorstufe für das vernetzte Polymer den Elastomerpartikeln zugesetzt wird bzw. in dem das, gegebenenfalls vernetzte, Polymer im Füllstoff enthalten ist, beträgt zwischen 5 Gew.-% und 50 Gew.-%, insbesondere zwischen 7 Gew.-% und 40 Gew.-%, vorzugsweise zwischen 7 Gew.-% und 25 Gew.-%. Den Rest auf 100 Gew.-% bilden die Elastomerpartikel, gegebenenfalls zusammen mit weiteren nicht reaktiven Nebenkomponenten, wie z.B. metallische und/oder textile Komponenten aus den eingesetzten Altstoffen, wie z.B. Altreifen.

Gemäß einer Ausführungsvariante des Verfahrens ist vorgesehen, dass das Elastomer-Polymer-Compound nach dessen Herstellung noch pelletiert wird, wozu herkömmlich Pelletieranalgen verwendet werden können, wie z.B. Pelletierpressen. Vorzugsweise wird dabei das Elastomer-Polymer-Compound auf eine durchschnittliche Größe (arithmetischer Mittelwert) der Pellets zwischen 2 mm und 5 mm pelletiert. Hierbei ist von Vorteil, wenn für das Elastomer-Polymer-Compound verschiedene Partikelgrößenfraktionen der Elastomerpartikel eingesetzt werden, da damit eine höhere Dichte der Pellets erreicht werden kann. Gegebenenfalls kann die Pelletierung vor der der Vernetzung des Polymers durchgeführt werden, insbesondere wenn eine bereits vorpolymerisierte Vorstufe für das Polymer verwendet wird.

Mit dem beschriebenen Verfahren kann ein Füllstoff hergestellt werden, der bevorzugt in Beschichtungen eingesetzt wird, bestehend aus einem Gummi-Polymer-Compound aus Gummipartikel und einem Polymer, wobei die Gummipartikel mit dem Polymer zumindest teilweise beschichtet sind, und wobei das Polymer eine, gegebenenfalls vernetzte, thermoplastische und/oder duroplastische Umhüllung der Gummipartikel bildet.

Zur Einstellung der Härte der Beschichtung, kann der Polymerisationsgrad bzw. der Vernetzungsgrad des Polymers geregelt werden, wobei das Polymer bevorzugt bis zu einem Polymerisationsgrad bzw. Vernetzungsgrad von zumindest 50 %, insbesondere zumindest 70 %, vorzugsweise zumindest 80 % aufweist. Letzteres kann beispielsweise über den Anteil an vernetzbaren Gruppen im Polymer oder die Menge an Härter und/oder die Temperatur, bei der die Polymerisation bzw. Vernetzung stattfindet und/oder über die Zeitdauer der Polymerisation bzw. der Vernetzung eingestellt werden. Ebenso ist es möglich, dass Hartpartikel in einem Anteil von bis zu 30 Gew.-% in das Polymer der Umhüllung eingemischt werden.

Vorzugsweise wird ein Polymer verwendet, das eine Glasübergangstemperatur von zumindest 50 °C, insbesondere zumindest 75 °C, aufweist.

Es sei an dieser Stelle erwähnt, das das thermoplastische Material als polymerisierbares oder bereits polymerisiertes Material eingesetzt werden kann.

Es ist bevorzugt, wenn die Polymerumhüllung mit einer Schichtdicke ausgewählt aus einem Bereich mit einer unteren Grenze von 0,1 µm und einer oberen Grenze von 5 µm, insbesondere aus einem Bereich mit einer unteren Grenze von 1 µm und einer oberen Grenze von 2 µm, hergestellt wird.

Es ist im Rahmen der Erfindung auch möglich, dass verschiedene Korngrößenfraktionen für die weitere Verarbeitung des Compounds in Beschichtungen eingesetzt werden, beispielsweise Elastomer-Polymer-Partikel mit einer Partikelgröße zwischen 0,001 mm und 0,01 mm und Elastomer-Polymer-Partikel mit einer Partikelgröße zwischen 0,04 mm und 0,06 mm, um z.B. eine höhere Packungsdichte des Füllstoffes in einer Matrix eines herzustellenden Produktes zu erhalten.

Selbstverständlich sind die genannten Werte nur beispielhaft zu verstehen. Des Weiteren können auch mehr als zwei Partikelgrößenfraktionen, beispielsweise drei oder vier, eingesetzt und miteinander vermischt werden. Beispielsweise können eine Fraktion mit einer Partikelgröße zwischen 0 µm und 20 µm mit einer Fraktion zwischen 25 µm und 35 µm und einer Fraktion zwischen 40 µm und 60 µm miteinander vermischt werden. Der Anteil der einzelnen Partikelgrößenfraktionen kann dabei zwischen 0 % und 95 %, insbesondere zwischen 10 % und 50 %, pro Fraktion betragen, wobei sich der konkrete Anteil nach dem herzustellenden Produkt richtet, in dem der Füllstoff aus dem Elastomer-Polymer-Compound eingesetzt wird.

Der Füllstoff wird insbesondere einer Beschichtung, wie z.B. einem Lack, einer Kunststoffbeschichtung, einer Farbe, eingesetzt.

Generell kann zur Verminderung des Geruchs der Gummipartikel das acide Wasserstoffatom des Mercaptobenzothiazols, das in der Gummiherstellung als Vulkanisationsbeschleuniger eingesetzt wird, für eine chemische Reaktion verwendet werden.

Zur Reduktion des Geruchs der Gummipartikel haben sich besonders auch ein Isocyanat (insbesondere ein MDI-Prepolymer), Formamid bzw. niedermolekulare Epoxide mit einem Molekulargewicht von maximal 10.000 g/mol, beispielsweise maximal 1.500 g/mol, erwiesen. Diese Substanzen können entweder direkt im Extruder (bzw. Compounder) oder vorher auf das Gummipulver aufgebracht werden (Dies trifft auch auf die voranstehen genannten thermoplastischen bzw. duroplastischen Verbindungen bzw. Vorstufen zu). Der Anteil an diesen Substanzen kann zwischen 0,5 Gew.-% und 10 Gew.-%, insbesondere zwischen 0,5 Gew.-% und 5 Gew.-%, bezogen auf die Gesamtmenge mit dem Gummigranulat, betragen

### Geruchstest:

Zur Bestimmung der Geruchsreduktion von Gummimehl wurde ein Geruchstest durchgeführt. Dazu wurde ein Elastomer-Polymer-Compound aus Altreifen und einem Polyethylen bzw. einem Polyester hergestellt, wobei die Elastomerpartikel eine Partikelgröße zwischen 0,7 mm und 1 mm aufwiesen. Der Polyethylenanteil bzw. der Polyesteranteil an dem Compound betrug 33 Gew.-%, der Rest wurde durch das Elastomer gebildet.

Von diesem Elastomer-Polymer-Compound wurden jeweils gleiche Mengen von 20 g einer Gruppe von 50 Personen im Falle des Polyethylenbeispiels und jeweils gleiche Mengen von 10 g einer Gruppe von 100 Personen im Falle des Polyesterbeispiels zur Evaluierung des Geruchs der Proben gereicht und eine einheitliche Instruktion zum Bewertungssystem und dem Verfahren der Geruchsevaluierung gegeben. Nachdem die Testpersonen die Intensität der Gerüche der Proben festgestellt haben, folgte eine Reihung nach der subjektiven Empfindung der Geruchsstärke. Ein Elastomer-Polymer-Compound mit der geringsten Geruchsintensität wird mit 0 und mit der stärksten mit 5 bewertet, entsprechend dem steigenden Geruch.

Um einen Vergleichswert zu erhalten, wurden den Testpersonen auch Proben von je 20 g (Polyethylenbeispiel) bzw. 10 g (Polyesterbeispiel) des unbehandelten Elastomermehls gereicht.

Der Test wurde stets als Einzelbefragung durchgeführt und es wurde darauf geachtet werden, Informationen und externe Einflüsse wie Licht und Lärm konstant zu halten. Zum Neutralisieren der einseitigen Geruchsempfindung wurden den Testpersonen Kaffeebohnen gereicht.

Alle befragten Testpersonen gaben an, dass die mit dem Polyethylen bzw. dem Polyester umhüllten Proben eine deutliche Geruchsreduktion zeigen, wobei die Werte für den Geruch der Proben zwischen 1 und 2 schwankten. Die reinen Elastomerproben wurden hingegen mit Werten zwischen 4 und 5 bewertet.

Ähnliche Geruchstest wurden auch mit Polypropylen (Anteil 25 Gew.-%) bzw. Polyesterharzen (Harzanteil 15 Gew.-%) bzw. Melaminharzen (Harzanteil 21,5 Gew.%) bzw. Polyurethanharzen (Harzanteil 15,4 Gew.%) als Polymerkomponente durchgeführt, wobei vergleichbare Ergebnisse erzielt wurden, sodass auf deren Wiedergabe verzichtet wird.

Zur Evaluierung des Anteils an zuzusetzendem Polymer bzw. Kunstharz wurden Proben beginnend mit einem Anteil an 5 Gew.-% Kunstharz in 5 Gew.-% Schritten bis zu einem Anteil von 50 Gew.-% Kunstharz hergestellt. Als Kunstharz wurde wieder ein Polyethylen bzw. ein Polyester eingesetzt.

Der Geruchstest wurde analog wie voranstehend für jede unterschiedliche Probe durchgeführt, allerdings wurden für diesen Test nur 20 Testpersonen befragt.

Es wurde dabei festgestellt, dass Proben mit einem Anteil von 5 Gew.-% Thermoplast bzw. Kunstharz mit Werten zwischen 2 und 3 bewertet wurden, Proben mit 10 Gew.-% Thermoplast bzw. Kunstharz mit Werten zwischen 1 und 2 und Proben ab 15 Gew.-% Thermoplast bzw. Kunstharz mit Werten zwischen 0 und 1.

Zum Vergleich wurde auch eine Probe mit 2,5 Gew.-% Thermoplast bzw. Kunstharz hergestellt. Diese Probe wurde von allen Testpersonen mit 4 bewertet.

Es zeigte sich also, dass ab ca. 15 Gew.-% keine weitere wesentliche Verbesserung in Hinblick auf die Geruchsreduktion der Elastomerpartikel erreicht werden kann. Mit den höheren Polymeranteilen bzw. Kunstharzanteilen kann jedoch der Füllstoff hinsichtlich seiner mechanischen Eigenschaften angepasst werden, wodurch das Einsatzspektrum des Füllstoffes vergrößert werden kann.

Es wurden im Rahmen der Erfindung auch Untersuchungen zur Anbindung des Elastomer-Polymer-Compounds an Polyolefinmatrices basierend auf PE und PP durchgeführt. Es wurde dabei festgestellt, dass die Verteilung dieses Füllstoffes in der Matrix homogener erreicht werden kann, wobei keine Entmischungstendenz bzw. keine bzw. nur eine geringe Tendenz zur Agglomeratbildung festgestellt werden konnte.

Die Ausführungsbeispiele beschreiben mögliche Ausführungsvarianten des Elastomer-Polymer-Compounds, wobei an dieser Stelle bemerkt sei, dass auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

## Patentansprüche

1. Verfahren zur Herstellung eines Elastomer-Polymer-Compounds nach dem Elastomer-partikel mit einem Polymer vermischt und beschichtet werden oder mit einer Vorstufe für ein Polymer vermischt und beschichtet werden und danach diese Vorstufe des Polymers polymerisiert wird, **dadurch gekennzeichnet, dass** als Polymer mindestens ein Thermoplast eigesetzt wird oder dass als Vorstufe für das Polymer mindestens ein vernetzbares Kunstharz eingesetzt wird, das nach der Vernetzung ein Thermoplast oder ein Duroplast bildet.

2. Verfahren nach Anspruch 1, **dadurch gekennzeichnet, dass** das Kunstharz vorpolymerisiert eingesetzt wird.

3. Verfahren nach einem der Ansprüche 1 oder 2, **dadurch gekennzeichnet, dass** das Polymer oder das Kunstharz bzw. mindestens eines der Harze ausgewählt ist aus einer Gruppe umfassend Polyolefine, Polystyrole, Polyester, Polyamide, Polyimide, Harnstoff-Formaldehydharze, Melaminharze, Melamin-Formaldehydharze, Melamin-Harnstoff-Formaldehydharze, Melamin-Harnstoff-Phenol-Formaldehydharze, Phenol-Formaldehydharze, Resorcin-Formaldehydharze, vernetzbare Isocyanat-Polyolharze, Epoxidharze, Acrylate, Methacrylate, Polystyrole, Polyesterharze, Isocyanat (insbesondere ein MDI-Prepolymer), Formamid bzw. niedermolekulare Epoxide mit einem Molekulargewicht von maximal 10.000 g/mol oder eine Mischung zweier oder mehrerer dieser Harze.

4. Verfahren nach einem der Ansprüche 1 bis 3, **dadurch gekennzeichnet, dass** ein selbstvernetzendes Kunstharz eingesetzt wird.

5. Verfahren nach einem der Ansprüche 1 bis 4, **dadurch gekennzeichnet, dass** das Polymer oder das Kunstharz in einem Anteil zwischen 5 Gew.-% und 50 Gew.-% zugesetzt wird.

6. Verfahren nach einem der Ansprüche 1 bis 5, **dadurch gekennzeichnet, dass** das Elastomer-Polymer-Compound nach dem Vermischen der Elastomerpartikel mit dem Polymer oder dem Kunstharz pelletiert wird.

7. Verfahren nach Anspruch 6, dass die Pellets mit einer Korngröße zwischen 2 mm und 5 mm hergestellt werden.

8. Verfahren nach einem der Ansprüche 1 bis 7, **dadurch gekennzeichnet, dass** die Elastomerpartikel mit einer Korngröße zwischen 0,001 mm und 1 mm eingesetzt werden.

9. Verfahren nach einem der Ansprüche 1 bis 8, **dadurch gekennzeichnet, dass** die Elastomerpartikel in mehreren verschiedenen Korngrößenbereichen eingesetzt werden.

10. Verfahren zur Reduktion des Geruchs von Gummipartikel enthaltend Mercaptobenzothiazol, **dadurch gekennzeichnet, dass** die aciden Wasserstoffatome des Mercaptobenzothiazols mit einem Isocyanat (insbesondere einem MDI-Prepolymer), Formamid bzw. einem niedermolekularen Epoxid mit einem Molekulargewicht von maximal 10.000 g/mol umgesetzt wird.

11. Füllstoff für Beschichtungen bestehend aus einem Elastomer-Polymer-Compound aus Elastomerpartikel und einem Polymer, wobei die Elastomerpartikel mit dem Polymer beschichtet sind, **dadurch gekennzeichnet, dass** das Polymer eine, insbesondere vernetzte, thermoplastische und/oder duroplastische Umhüllung der Elastomerpartikel bildet.

12. Füllstoff nach Anspruch 11, **dadurch gekennzeichnet, dass** das Polymer oder das Kunstharz ausgewählt ist aus einer Gruppe umfassend Polyolefine, Polystyrole, Polyester, Polyamide, Polyimide, Harnstoff-Formaldehydharze, Melaminharze, Melamin-Formaldehydharze, Melamin-Harnstoff-Formaldehydharze, Melamin-Harnstoff-Phenol-Formaldehydharze, Phenol-Formaldehydharze, Resorcin-Formaldehydharze, vernetzbare Isocyanat-Polyolharze, Epoxidharze, Acrylate, Methacrylate, Polystyrole, Polyesterharze, Isocyanat (insbesondere ein MDI-Prepolymer), Formamid bzw. niedermolekulare Epoxide mit einem Molekulargewicht von maximal 10.000 g/mol oder eine Mischung zweier oder mehrerer dieser Harze.

13. Füllstoff nach einem der Ansprüche 11 oder 12, **dadurch gekennzeichnet, dass da**s Polymer der Umhüllung einen Vernetzungsgrad von zumindest 50 % aufweist.

14. Füllstoff nach Anspruch 11 bis 13, **dadurch gekennzeichnet, dass** der Anteil des Polymers oder des Kunstharzes zwischen 5 Gew.-% und 50 Gew.-% beträgt.

15. Füllstoff nach einem der Ansprüche 11 bis 14, **dadurch gekennzeichnet, dass** die Elastomerpartikel eine Korngröße zwischen 0,001 mm und 0,1 mm aufweisen.

16. Verwendung eines, insbesondere vernetzbaren, Thermoplastes und/oder Duroplastes zur Reduktion des Geruches von Gummipartikel.

17. Verwendung eines Isocyanats (insbesondere eines MDI-Prepolymers), Formamids bzw. niedermolekularen Epoxids mit einem Molekulargewicht von maximal 10.000 g/mol zur Reduktion des Geruches von Gummipartikel.

18. Verwendung eines, insbesondere vernetzbaren, Thermoplastes und/oder Duroplastes bzw. Kunstharzes zur Herstellung eines rieselfähigen Füllstoffes auf Basis eines Elastomer-Polymer-Compounds mit einer Partikelgröße zwischen 0,001 mm und 0,15 mm.
